# EUROPEAN PATENT SPECIFICATION

(11) **EP 0 946 619 B1**
(45) Date of publication and mention of the grant of the patent: **26.06.2002**
(21) Application number: 97953886.5
(22) Date of filing: 18.12.1997
(51) Int. Cl.: C08F 283/00, C08F 255/02, C09J 151/00, C08G 67/02

(54) **GRAFT COPOLYMERIZED COMPOSITIONS**
PFROPFCOPOLYMERISIERTE ZUSAMMENSETZUNGEN
COMPOSITIONS COPOLYMERISEES GREFFEES

(30) Priority: 23.12.1996 US 34140 P; 23.12.1996 US 34141 P
(43) Date of publication of application: 06.10.1999
(73) Proprietor: SHELL INTERNATIONALE RESEARCH MAATSCHAPPIJ B.V., 2596 HR Den Haag (NL)
(72) Inventor: ASH, Carlton, Edwin, Sugar Land, TX 77479 (US); MYSORE, Narayana, Houston, TX 77095 (US); WONG, Pui, Kwan, Houston, TX 77005 (US)
(86) International application number: EP9707194
(87) International publication number: WO9828354

(56) References cited:
- EP-A- 0 266 994
- WO-A-95/24449
- US-A- 3 472 918
- US-A- 4 927 888
- US-A- 5 079 316
- DATABASE WPI Section Ch, Week 8539 Derwent Publications Ltd., London, GB; Class A17, AN 85-240417 XP002063502 & JP 60 158 282 A (MITSUI DU PONT POLYCHEMICAL) , 19 August 1985

## Description

### FIELD OF THE INVENTION

This invention relates to resins made from monomers of olefins and carbon monoxide and their use as adhesives.

### BACKGROUND

Polymers of carbon monoxide and olefins generally referred to as polyketones are well known in the art. The class of linear alternating polymers of carbon monoxide and at least one ethylenically unsaturated hydrocarbon are of particular interest among polyketone polymers. This class of polymers is disclosed e.g. in U.S. Patents No. 4,880,865 and 4,818,811. Polyketone polymers display a well balanced set of mechanical properties which make them particularly useful as engineering thermoplastics.

Other materials having useful properties have also been formed from the combination of various olefins and carbon monoxide. Among these, are relatively low molecular weight materials comprising oligomers or low molecular weight polymers. In this case, however, a monomer other than carbon monoxide and ethene comprises at least 20%wt of the total weight of the polymer. Two olefinic monomers are ordinarily used such as ethene and propene with a relatively high percentage of each (on a weight or molar basis) compared to the linear alternating aliphatic polyketones used as engineering thermoplastics. The monomeric mix will typically include about 50% mole (based on total weight of polymer) CO and about 50% mole of olefins (with at least about 30% by weight of the total olefin content comprised of C₃ or higher olefins).

These oligomers or low molecular weight polymers can be employed as thermosets. Depending upon the composition and method of preparation, many will still advantageously exhibit many properties ordinarily associated with thermoplastics under a range of conditions. In such applications they are cured with a curing agent which is generally an amine. Curing may be achieved in the presence of an acid catalyst. Such resins are preferable to existing thermosets in a variety of applications due to reduced environmental nuisances, ease of use, and property mix.

One application of these thermosets is as an adhesive. More particularly, they are useful as glues for wood composites in the preparation of plywood and flake or particle board. To this point, the wood composite industry has generally used adhesives such as urea formaldehyde resins and phenol formaldehyde resins. However, many of the wood composites prepared with them are losing favour in important market segments even though the demand remains generally high for a high impact resistant wood composite with good dimensional stability in the presence of moisture. Much of this is attributable to environmental and safety factors associated with the systems.

Wood glue compositions based on neat olefin/CO resins and amine curing agents have been previously prepared. While these neat glue systems provide good adhesion, their viscosity and pot life are not ideal for many commercial applications. Lowering their viscosity and increasing their pot life would extend the range of applications for which olefin/CO resins could be used. In particular, they could be made much more suitable for use in the production of plywood and oriented strand board under such conditions.

### SUMMARY OF THE INVENTION

In one aspect of this invention, olefin/CO copolymers are graft copolymerized with vinyl monomers. Grafting may be conducted through the application of high energy radiation to olefin/CO copolymers in the presence of a suitable monomer. The graft copolymers are excellent glues, particularly in wood applications, and are cured by reaction with an amine curing agent in the presence of an acid catalyst. The graft copolymers are advantageously prepared as low molecular weight polymers.

In another aspect of this invention improved adhesives are prepared. These adhesives are particularly useful for binding wood and wood byproducts and are prepared based on a copolymer of carbon monoxide, olefinically unsaturated compounds, and a curing agent.

In another aspect of this invention a wood composite is presented. The composite comprises wood parts adhered to one another by means of a cured binder which is obtainable by curing a curable resin composition which contains a copolymer of carbon monoxide with an olefinically unsaturated compound and a curing agent.

The differents aspects of this invention are set out more specifically in the appended claims 1 to 10.

### DETAILED DESCRIPTION

Neat olefin/CO copolymer resins in combination with amine curing agents can be effectively used as wood glues. In the practice of this invention olefin/CO resins are improved through graft copolymerization. It has been found that converting the neat olefin/CO copolymer this way makes the system amenable to waterborne application, significantly lengthens potlife, and reduces the viscosity thereby significantly improving the workability of these systems. Furthermore, grafting the olefin/CO copolymers can significantly reduce the overall raw material cost of the glues since a major portion of the glue can be an inexpensive material such as styrene. The graft copolymer is preferably made by imbibing a vinyl monomer into the oil phase of a dispersion of olefin/CO copolymer. Grafting is achieved with the addition of a radical initiator, or through the application of high energy radiation. Generally, this results from the abstraction of a hydrogen alpha to a carbonyl group in the olefin/CO copolymer by a radical. This forms a macroradical on the olefin/CO copolymer backbone which then initiates polymerization of vinyl monomers to form a graft copolymer.

Copolymers of carbon monoxide and an olefinically unsaturated compound are known. Preferably the copolymer contains 1,4-dicarbonyl entities in its polymer chain because this arrangement accommodates certain curing reactions as, for example, with poly-primary-amines described more fully below. Such olefin/CO copolymers can be prepared by palladium catalyzed polymerization using the methods known from, for example, EP-A-121965, EP-A-181014 and EP-A-516238. The polymers so prepared may be linear alternating copolymers of carbon monoxide and the olefinically unsaturated compound(s). That is, the polymer chains contain the monomer units originating in carbon monoxide (i.e., carbonyl groups) and the monomer units originating in the olefinically unsaturated compound(s) in an alternating arrangement. Perfectly alternating copolymers of carbon monoxide and olefinically unsaturated compounds are preferred because these have a higher content of carbonyl groups in the polymer chain relative to random copolymers. This can contribute to the quality of the cure of resins made from these systems leading to a high level of crosslinking.

The copolymers of carbon monoxide and olefinically unsaturated compounds may be based on a hydrocarbon as the olefinically unsaturated compound, but the olefinically unsaturated compound may also contain a heteroatom provided that it is separated from the double bond by a spacer group. For example, comonomers such as 10-undecen-1-ol and 10-undecenoic acid can be used. It is preferred that the copolymer is based on an olefinically unsaturated hydrocarbon having up to 10 carbon atoms. Aliphatic α-olefins with 3 to 6 carbon atoms are particularly suitable in this capacity and include, for example, those having a straight carbon chain such as propene, 1-butene, 1-pentene and 1-hexene. Propene is the preferred monomer of this group. It is most preferred to use a combination of ethene and propene with propene comprising the primary monomer.

The molecular weight of the copolymer prior to grafting may vary between wide limits. Copolymer with a number average molecular weight in the range of from 200 to 20,000 are used. However, copolymers having number average molecular weights between 500 to 5000 are preferred. Molecular weights from 1000 to 4000 are most preferred. The copolymers typically have a molecular weight distribution, such that their Q value amounts to 1.1-5, more typically 1.5-3, the Q value being the quotient of the weight average molecular weight and the number average molecular weight. The relatively low molecular weight of the copolymer enables the resin systems of this invention to be used as a liquid at the temperatures generally used in processing and working with the copolymer. This is frequently in the range of 10-80 °C, more frequently in the range of 20-60 °C. The processing of the copolymer encompasses, for example, the preparation of the binder used in this invention and the application of the binder onto the wood surface.

Prior to grafting, the copolymer comprises about 50% mole CO and 50% mole olefinically unsaturated compound. Preferably the olefinically unsaturated compound content comprises between 0 and 70 %wt ethene and between 30 and 100 %wt propene. It is more preferred that the olefinic mix is between 20 and 70% by weight ethene and between 80 and 30 %wt propene. It is most preferred that the olefinic mix is 70 %wt propene and 30 %wt ethene.

Grafting can be conducted with any of the methods used to form graft copolymers. This includes exposure of an appropriate monomer and copolymer mix to high energy radiation such as e-beam radiation, ion beam radiation, γ ray radiation or mixtures of these, heating a suitable monomer in the presence of the copolymer, or reaction of a suitable monomer in the presence of a radical initiator and copolymer. Any other method for graft copolymerizing polymers will be useful in the practice of this invention.

The olefin/CO copolymer of this invention will typically be a liquid. Thus, a solution can generally be made from the combination of the polymer and the monomer which will form the graft. It may be necessary to emulsify this solution with a surfactant. Nonionic surfactants are preferred for this purpose. In most cases, exposure to radiation (in the absence of oxygen) which is sufficient to induce graft copolymerization will increase the viscosity of the liquid. However, it will not ordinarily solidify the polymer. This is useful in applying the materials as a glue since they can readily be put into waterborne solutions, applied to the materials to be glued, and then cured.

Radiation intensities sufficient to affect grafting are typically from 0.001 to 20 Mrads per hour. The total dose of ionizing radiation required for graft copolymerization is usually from 0.005 Mrads to 20 Mrads, 0.1 Mrads being most preferred.

The polymer to be grafted should generally be kept free of oxygen during the grafting process. This can be accomplished by subjecting the polymer/monomer mix to radiation in vacuo or in an inert gas such as nitrogen, helium, neon, argon and carbon dioxide.

The temperature and pressure conditions under which grafting is conducted are not critical to this invention. Generally, any convenient temperature between 0 °C and 100 °C can be used as the reaction temperature. The reaction will still occur at temperatures below the lower limit but reaction rates will slow significantly. Generally, atmospheric pressures are used but here too, wide ranges of conditions are possible without significantly affecting the grafting process.

The reaction time can be varied over a wide range. When a high dose of radiation is applied, the reaction may occur in seconds. In the preferred range of radiation dosages of between 0.05 Mrad and 2 Mrad at ambient temperatures, reaction times of between 10 seconds and 24 hours will advantageously provide a grafting efficiency of between 5 and 95%. Graft efficiency is a ratio of the amount of monomer grafted to the amount of monomer available on a weight basis.

Radical initiation is the most preferred method of preparing the graft polymerized copolymers of this invention. Suitable monomers used in forming grafts by this method include, for example, monoolefinic hydrocarbons such as the styrenes and their derivatives, monolefinically unsaturated esters such as vinyl acetate, vinyl esters of halogenated acids such as vinyl alpha-choroacetate, allyl and methallyl compounds such as allyl chloride, esters of alkenyl alcohols such as beta-ethyl allyl alcohol, halo-alkyl acrylates such as methyl alpha-chloroacrylate, alkyl alpha-cyanoacrylates, fumarates such as diethyl fumarate, monoolefinically unsaturated nitriles such as acrylonitrile, amides of previously mentioned acids such as acrylamide, vinyl alkyl ethers such as vinyl methyl ether, vinyl sulphides such as vinyl beta ethoxyethyl sulphide, diolefinically unsaturated hydrocarbons such as 1,3 butadiene, and mixtures of the foregoing compounds. Preferred monomers are styrenes, acrylates, methacrylates, vinyl esters, and vinyl halides. Styrenes are most preferred.

Radical initiators can be either water soluble or oil soluble. Water soluble radical initiators include, for example, potassium persulphate, ammonium peroxydisulphate, potassium peroxydisulphate, sodium persulphate, hydrogen peroxide, and water soluble azo initiators. Oil soluble radical initiators include, for example, benzoyl peroxide, t-butyl perbenzoate and 2,2'-azobis(isobutyronitrile). Water soluble initiators are preferred such as potassium persulphate or azo initiators. The concentration of the free radical initiator is 0.01 to 0.5 grams per hundred grams of total monomers.

Redox initiation involving an oxidant, such as potassium persulphate or potassium bromate, and a reductant, such as sodium metabisulfite, or tertiary amines, such as triethyl amine, can also be used to initiate polymerization, particularly at low temperatures.

The process of producing the graft copolymers of this invention involves contacting the olefin/CO copolymer with an initiator in the presence of monomer used to form the grafted portion of the polymer. Preferably, this is done by introducing the monomer used to form the graft into the oil phase of a dispersion of olefin/CO resin and then adding an initiator to the dispersion. A minor amount of agitation such as through stirring or mixing may be applied.

The olefin/CO dispersion to which the graft monomer is added is preferably formed by mixing the olefin/CO copolymer with water and a surfactant. Typically, the dispersion will contain more water than olefin/CO copolymer on a weight basis although, as will be readily appreciated by those skilled in the art, additional aliquots of copolymer may be added during emulsification to increase the solids content of the product ultimately formed. In glue applications, a high solids content is desired provided that viscosity can be kept low enough to easily work with the material. Solids contents up to about 60% can be achieved under these conditions using glues made from the graft copolymers of this invention.

Any surfactant capable of dispersing the olefin/CO resin in water can be used provided that the material does not interfere in the initiation of the graft copolymerization. Preferably, the surfactants are nonionic and include, for example, polyalkylene glycols generally, and polyalkylene glycol alkyl ethers, polyalkylene glycol alkyl phenyl ethers, polyalkylene glycol fatty acid esters, sorbitan fatty acid esters, alkyl polyglycoxides and fatty acid dialkanol amides. Selection of the amount of surfactant added to form the emulsion is well within the grasp of one having ordinary skill in the art. Typically, the surfactant will comprise 3 to 15% weight of the olefin/CO copolymer used to form the emulsion but any amount which will serve the purpose of getting both copolymer and grafting monomer into an emulsion can be used.

Once the graft copolymers of this invention are prepared they can be further prepared as glues and adhesives (commonly referred to as binders) through the addition of a curing agent and, optionally, a catalyst. Binders so prepared can then be used to join together two or more materials of like or dissimilar character. For example, composites can be formed of wood parts, wood chips, veneers of different species, metals, various polymers, and other materials. Composites formed from the union of two or more wood parts are a most preferred embodiment of this invention.

The species and the form of the wood parts which are used for producing the composites are not critical. The wood may be a high or a low density wood and it may be of deciduous or coniferous origin. Examples of suitable species are oak, chestnut, ash, maple, teak, okoume, mahogany, meranti and pine. Very good results can be obtained with beech, spruce and poplar. The wood does not need any pretreatment other than which may normally be applied when a conventional binder is used. It is generally sufficient to bring the wood parts in the size and shape desired for the type of composite to be produced, for example, by applying mechanical and/or chemical means. Suitably the wood is used in the form of planks, veneers, timber, lamellae, chips or pulp. A combination of two or more species or forms of wood parts may be used, for example, to improve the appearance of the composite.

The wood may be pretreated to increase its durability. An example of such a pretreatment is treatment with super-heated steam at 150-220 °C under pressure followed by heating at 100-220 °C at ambient pressure. Another pretreatment is salt impregnation with, e.g., chromium, copper, mercury, arsenic salts or combinations thereof.

Many curing agents can be used in the binder according to this invention. Suitable curing agents or curing systems are disclosed in EP-A-372602 and may comprise, for example, an amine, a thiol or acrylonitril. Preferred curing agents include, for example, hexamethylenediamine (HMDA), hexamethylenediamine carbamate, tetramethylenepentamine, hexamethylenediaminecinnamaldehyde adduct, and hexamethylenediaminedibenzoate salt. Aromatic amines and cycloaliphatic amines can be used but those having bulky functional groups are not preferred. Aliphatic primary diamines having the formula H₂N-R-NH₂, (R denotes a bivalent aliphatic bridging group having up to 10 carbon atoms in the bridge) are preferred curing agents. HMDA is the most preferred curing agent.

It can also be advantageous to employ a mixture of curing agents. In particular a mixture of a relatively more reactive curing agent and a less reactive curing agent is useful. For example, straight chain aliphatic diamines may be used as the more reactive curing agent in combination with aromatic or cycloaliphatic poly-primary amines as the less reactive curing agent. By the presence of the more reactive curing agent a rapid gelling can be achieved once the curing has started. Upon prolonged curing the cyclic carbon skeleton of the less reactive curing agent will boost the mechanical strength of the composite at a high temperature. The molar ratio of the more reactive curing agent and the less reactive curing agent may vary between wide limits according to the requirements of the particular use of the binder. This molar ratio can be determined readily by the skilled person by applying routine experimentation. Typically the molar ratio will be 2:98 to 98:2.

The degree of crosslinking occurring during the curing is dependent, inter alia, on the quantity of curing agent used relative to the quantity of the copolymer of carbon monoxide and olefinically unsaturated compound. The relative quantity of curing agent may vary between wide ranges and by routine experimentation a preferred relative quantity can be established. When a poly-primary-amine is used as curing agent, the molar ratio of the carbonyl groups in the copolymer and the primary amine groups of the curing agent is suitably in the range of from 0.25 to 8.0 and more suitably in the range of from 0.4 to 2.0.

The curing of the copolymer may be carried out in the presence of a curing catalyst or in the absence of any curing catalyst. Advantages of using a catalyst will generally be that the curing can be carried out at a lower temperature or during a shorter period of time. When the curing agent is an aliphatic primary diamine, suitable catalysts are weak acids, in particular acids having a pKa in the range of from 2 to 5.5, preferably in the range of from 2.5 to 5, when measured in water at 20 °C. A preferred class of acids are the organic acids, in particular carboxylic acids, because these are at least to some extent soluble in the copolymer to be cured. Monocarboxylic acids are more preferred due to their generally better solubility in the copolymer. Examples of monocarboxylic acids are acetic acid, nicotinic acid, pivalic acid, valeric acid, benzoic acid and, salicylic acid. Another suitable weak acid is phosphoric acid. Acetic acid is the most preferred catalyst.

The weak acid may be used in small quantities. Suitable quantities are from 0.1 to 15.0% by weight, preferably from 0.1 to 10.0 % by weight relative to the weight of the copolymer. It is more preferred that the weak acid is used in a quantity of from 0.2 to 10.0% by weight. It is most preferred that from 0.5-8.0 %wt, on the same basis is used.

The waterborne glue compositions of this invention typically display viscosities which make them easy to work with. Typically these range between 200 and 8000 mPa.sec, more typically between 200 and 5000 mPa.sec, at room temperature as measured in a Brookfield viscometer. However, if desirable, a diluent may be used in the curable resin composition to facilitate the application of the composition onto the wood parts. A diluent may also improve the compatibility of the curing agent and any catalyst with the copolymer. Suitable diluents are, e.g., lower alcohols, lower ketones, lower esters, such as acetates, and lower ethers. The term "lower" refers to diluents with an average of 5 or less carbon atoms per molecule. Preferred diluents are water and lower alcohols, with water being most preferred. Examples of other suitable diluents are acetone, ethyl acetate, methyl propionate and ethylene glycol dimethylether. When the curable resin composition is to be applied, for example, by spraying, the viscosity may suitably be in the range of 100 to 2000 mPa.s, preferably in the range of 500 to 1000 mPa.s, at the temperature of application. Preferably the diluent and the copolymer are used in a weight ratio of at least 1:5, in particular in the range of 1:2 to 5:1, more in particular 1:1.5 to 2:1.

It is possible to prepare the curable resin composition in the form of a paste which can easily be spread onto the wood surface in a convenient temperature range, for example, between 10 °C and 50 °C. Such a paste consistency can be accomplished by applying in the binder a relatively small quantity of a diluent, such as water, a lower alcohol or a lower ketone. Typical quantities of diluent are in the range of 0.2-5.0% by weight relative to the weight of the copolymer, in particular 0.3-3.0%, more in particular 0.5-1.0% on the same basis.

The binder may contain additional components which may be added to modify properties of the binder. Examples of suitable additional components are viscosity modifiers, flame retardants, gap filling agents, antioxidants, UV stabilizers and colorants. For example, clay may be used as a filler or it may be used to decrease the viscosity at high shear rate. A suitable gap filling agent is silica, cereal flour, or coconut shell flour. Antioxidants and UV stabilizers are particularly desirable additives when the composition formed according to this invention is used as a coating material.

The binder may be applied to the wood surface using any conventional technique. The binder, in particular the paste described hereinbefore, may be spread over the surface by using, for example, a brush, a roller, a knife or a blade. It has already been indicated that, after the addition of a suitable quantity of diluent, the binder can also be applied by spraying it by means of a nozzle driven by a compressed gas, for example, as in continuous in-line spraying or by using a paint-sprayer. If desired, when a composite having a soft hand feel is to be produced, the binder may also be applied as a coating at wood surfaces which will be positioned at the outer surface of the composite. It is also possible to coat the cured composite and to cure the coating in an additional curing step.

The quantity of binder relative to the quantity of wood may vary between wide limits and will generally be dependent of the type of composite to be produced. For wood laminates this quantity may be specified per square meter of wood surface covered by the binder or per square meter of joint present between two wood lamellae. Typically, between 30 and 400 g of the binder per square meter of joint are used. Preferably, between 60-120 g of binder is used.

When the wood composite is a fibre board or a particle board the quantity of binder may more conveniently be related to the weight of the composite. Per kilogram of the fibre board or particle board typically such a quantity of binder is used which is based on 20-150 g, more typically 30-100 g of the copolymer of carbon monoxide with an olefinically unsaturated compound. For special applications of fibre boards it may be desired to have the binder present as the continuous phase, in which cases per kilogram of the composite such a quantity of binder may be used which is based on 150-600 g and in particular 200-500 g of the copolymer of carbon monoxide with an olefinically unsaturated compound.

After, or simultaneously with, applying the binder onto the wood surface the wood parts are brought together, such that binder resides between wood parts, and curing conditions are subsequently applied. The temperature and the pressure may vary between wide limits. The temperature will generally be dependent of the curing agent and the presence of a curing catalyst. When a poly-primary-amine is used as curing agent the temperature will suitably be above 50 °C, for example, in the range of from 80 °C to 200 °C, in particular 100 °C to 160 °C. For laminates typical pressures are in the range of from 1 to 30 kg/cm², preferably from 2.5 to 25 kg/cm². In fibre board and particle board applications typical pressures are in the range of from 10 to 150 kg/cm², preferably from 25 to 100 kg/cm².

Various types of wood composites can be produced according to this invention, such as fibre board, particle board, for example, wafer board, and laminate, such as plywood and laminated beam or timber. The composites have an excellent impact resistance/strength balance and in the presence of moisture they have an excellent dimensional stability. Hence, the composites can advantageously be applied in the production of doors, parquet flooring, sport articles, such as hockey sticks and electrical appliances, such as switchboards and panels for distributing boxes. Fibre boards which have the binder as the continuous phase can find utility as construction panels.

The invention will be further illustrated by means of the following nonlimiting examples. Glue formulations are as follows: A= 100 parts by weight (pbw) of the Emulsion of Example 2, 25 pbw 65% HMDA, 4 pbw 20% acetic acid. B= 100 pbw of the Emulsion of Example 3, 21 pbw 65% HMDA, 3.3 pbw 20% acetic acid. C=100 pbw of the Emulsion of Example 4, 25 pbw 65% HMDA, 4 pbw 20% acetic acid. D=100 pbw of the Emulsion of Example 3, 18.8 pbw 65% HMDA, 4 pbw 20% acetic acid.

### Example 1 (Olefin/CO Polymer Preparation)

An autoclave containing 80 parts by volume methanol, 10 parts water, and 10 parts acetic acid was heated to 95 °C and then charged with 36 bar of propene, 16 bar of CO, 4 bar of ethene, and a catalyst solution comprised of palladium acetate, 1,3-bis (di-o-methoxyphenylphosphino)-propane, trifluoromethanesulfonic acid in a molar ratio of 1/1.05/2.1. During the reaction, the temperature was maintained at 95 °C and the reactor pressure was kept constant by continuous feeding of a 1/1 mixture of ethene/CO. After 20h, the reactor was cooled to room temperature and vented. The solvent was removed under reduced pressure to yield an alternating olefin/CO copolymer with a number average molecular weight of 1800 and a ethene/propene molar ratio of 28/72. The productivity of the catalyst was 36kg of oligomer per g of Pd.

### Example 2 (Preparation of a Waterborne Resin)

To a resin kettle equipped with an anchor-shaped stirrer was added a mixture of 76.6 parts by weight (pbw) of a perfectly alternating copolymer as prepared in Example 1, 52 pbw of a nonionic poly(ethylene glycol) surfactant (commercially available under the tradename "23W004" by Shell Chemical Company), and 108 pbw of water. The mixture was stirred at 200 rpm and additional aliquots of the copolymer were added over a period of 2 hours until the total amount of copolymer in the mixture was 500 pbw. After further stirring at ambient temperature for 3 hours, 343 pbw of water was added over a period of 1 hour to yield an emulsion with a 55% solids content.

### Example 3A (Preparation of Waterborne Olefin/CO Resin Grafted with Polystyrene)

To 479 pbw of the emulsion prepared in Example 2 was added 144 pbw of water, 163 pbw of styrene and 1.45 pbw of potassium persulphate. The mixture was placed in a bottle, shaken for 15 minutes, and placed in an oven at 60 °C overnight. The product was an emulsion of olefin/CO copolymer grafted with polystyrene. The weight ratio of olefin/CO copolymer to polystyrene was 60/40 and the solid content of the emulsion was 55% by weight.

### Example 3B Graft Copolymerization of Olefin/CO Polymers by Irradiation

A terpolymer of carbon monoxide, ethylene, and propylene was produced in the presence of a catalyst composition formed from palladium acetate, the anion of trifluoroacetatic acid and 1,3-bis(diphenylphosphino)-propane. The melting point of the linear terpolymer was 220 °C and it had a limiting viscosity number (LVN) of 1.8 measured at 60 °C in m-cresol.

A mixture of 10 g of the terpolymer and 2 g of styrene inhibited with 10 ppm of *t*-butylcatechol was placed in a glass jar in the presence of air and irradiated with a ⁶⁰Co γ ray source at 0.26 Mrad/hour and ambient temperature for 24 hours. The resulting solid was extracted with hot toluene to remove homopolystyrene. Solid state ¹H NMR analysis of the extracted product showed that it contained grafted polystyrene. The grafting efficiency (monomer grafted/total monomer) was 78%.

This example illustrates that polymers based on an olefin/CO backbone can be graft copolymerized through the application of high energy radiation.

### Example 3C (Preparation of Low Molecular Weight Olefin/CO Graft Copolymer: Hypothetical)

To 500 pbw of the emulsion prepared in Example 2 is added 150 pbw of water and 170 pbw of styrene. Irradiation of the resulting mixture with a ⁶⁰Co γ ray source at 0.26 Mrad/h and ambient temperature of 0.5 h. will graft polymerize the styrene to produce a waterborne emulsion with a 55% solids content.

### Example 4 (Preparation of Waterborne Olefin/CO Resin Grafted with Poly(methylmethacrylate)

A mixture of 90 pbw of the emulsion prepared according to Example 2, 29.8 pbw of methyl methacrylate, and 0.1 pbw of potassium persulphate was heated in a resin kettle with stirring at 60 °C for 6 hours. An emulsion of olefin/CO copolymer grafted with poly(methyl methacrylate) was formed. The weight ratio of olefin/CO copolymer to poly(methyl methacrylate) was 60/40 and the solid content of the emulsion was 66 %wt.

### Example 5 Preparation of Plywood Panels and Performance Comparison

This example is a modified version of Plywood Specimen Test 6.1.5.3 as described in " PSI-95, Construction and Industrial Plywood", 1995 reproduced by the American Plywood Association.

Three-layer (nonnotched) crossply wood panels were prepared from 0.4 cm (1/6") southern pine veneers using three different waterborne glue formulations prepared by mixing the emulsions obtained in Examples 2, 3, and 4 respectively, with hexamethylenediamine (HMDA) and acetic acid. The panels were hot pressed at 200 °C and 1.4 MPa (200 psig). The dosage used for all panels was 65 g of solid/m² per glue line. To evaluate water resistance, 2.5 x 7.6 cm² (1"X3") specimens were cut from the panels, soaked in boiling water for 4 hours, dried in an oven at 63 °C for 23 hours, and immersed in water for 4 hours. Glue performance was rated according to the number of specimens which did not delaminate after the 2-cycle boil test for a given hot press time.

Results are listed in Table 1 below.

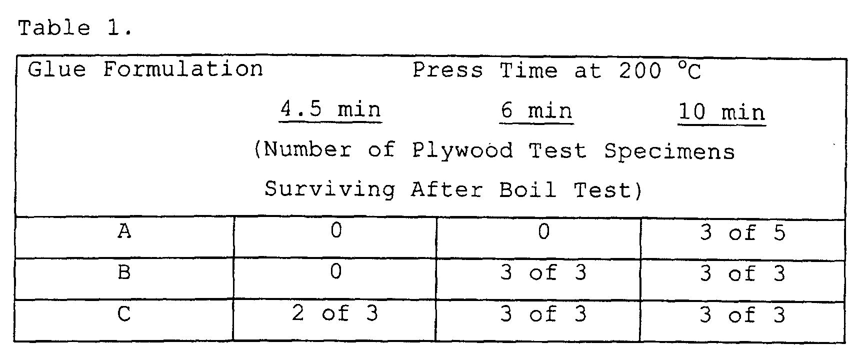

This example illustrates the superior wood bonding that is attainable through use of glues made according to this invention. Specimen A employed a glue comprised of olefin/CO polymer which was not graft copolymerized. Specimens B and C were glues made according to the instant invention. Glued samples employing the non-grafted polymer as the glue required a 10 min hot press time to survive the boil test. Glued samples using glues made according to this invention survived boil with a 6min (or less) hot press time.

### Example 6 Preparation and Performance of Flake Boards

This example is a modified version of Plywood Specimen Test 5.4.1 as described in "0437 Series 93 Standards on OSB and Waferboard",1993, published by the Canadian Standards Association.

Randomly oriented strand board panels of 46 x 50 x 1.11 cm³ (18" X 20" X 7/16") were prepared from southern pine wood flakes by spraying the flakes with a 51% nonvolatile wax (a 15 cpp provided by Borden) emulsion and a waterborne glue, successively in a rotating drum. Spraying was conducted with an atomizing sprayer (Concord High Precision Atomizer made by Coil Industries, Ltd). The amounts of wax and glue applied were 1 and 4% solid relative to the weight of wood, respectively. The panels were hot pressed at 200 °C for 4.5 minutes and the press pressure was 5.5 MPa (800 psig) for the first 1.5 minutes and 2.8 MPa (400 psig) for the remainder of the press cycle. Results are presented in Table 2 below. Modulus of rupture, modulus of elasticity, and internal bond were measured according to ASTM D 1037 using a Tinius Olsen instrument.

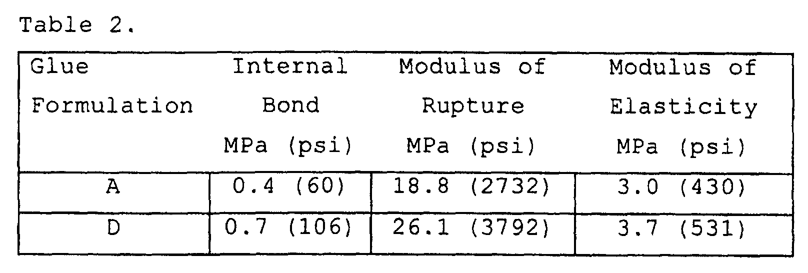

The Canadian Standards Association requirements are an Internal Bond of 0.3 MPa (50 psi), a Modulus of Rupture of 17.2 MPa (2500 psi), and a Modulus of Elasticity of 3.1 MPa (450 psi). This example illustrates the excellent wood bonding properties of glues made according to this invention. The particle board made with glue according to the invention (D) greatly exceeded the standards set by the Canadian Standards Association.

## Claims

1. A composition comprising an alternating aliphatic polymer of olefinically unsaturated compounds and carbon monoxide monomers having a number average molecular weight between 200 and 20,000 and grafted thereto, polymers of vinyl monomers.

2. The composition of claim 1 wherein said olefinically unsaturated compounds comprise ethene and propene.

3. An adhesive comprising an alternating aliphatic polymer of olefinically unsaturated compounds and carbon monoxide monomers having a number average molecular weight between 500 and 5000 and vinyl polymers grafted to said aliphatic polymer to form a graft copolymer, and a curing agent mixed with said graft copolymer.

4. The adhesive of claim 3 wherein the curing agent is an aliphatic primary diamine.

5. The adhesive of claim 4 wherein the molar ratio of the carbonyl groups in the copolymer and the primary amine groups of the curing agent is in the range of from .4 to 2.0.

6. The adhesive of claim 4 or 5 further comprising a catalyst comprising an organic acid having a pKa in the range of from 2 to 5.5, when measured in water at 20 °C, and which is present in a quantity of from 0.1 to 10.0% by weight, relatively to the weight of the copolymer.

7. A curable resin composition comprising the composition of claim 1 in water and having a viscosity between about 200 and 8000 mPa.s at room temperature, as measured in a Brookfield viscometer.

8. A method of making a curable resin comprising:
(a) dispersing an alternating aliphatic polymer of olefinically unsaturated compounds and carbon monoxide having a number average molecular weight between about 500 and 5000 in water, and
(b1)adding an initiator and a vinyl monomer to said dispersion to form a graft copolymer, or
(b2)adding a vinyl monomer and exposing the combination of the alternating aliphatic polymer of olefinically unsaturated compounds and carbon monoxide and the vinyl monomer to high energy radiation to form a graft copolymer.

9. The method of claim 8 wherein the vinyl monomer is a monoolefinic hydrocarbon, monolefinically unsaturated ester, vinyl ester of halogenated acids, allyl compound, methallyl compound, esters of alkenyl alcohol, halo-alkyl acrylate, alkyl alpha-cyanoacrylate, fumarate, monoolefinically unsaturated nitrile, amides of acrylic acid, vinyl alkyl ether, vinyl sulphides, diolefinically unsaturated hydrocarbon, or mixtures thereof.

10. A method of forming a wood composite of two or more parts comprising:
(a) combining the composition of claim 1 with a curing agent and a catalyst to form a glue,
(b) applying said glue to one or more parts to be joined together, and
(c) joining said parts together.

## Patentansprüche

1. Eine Zusammensetzung, umfassend ein alternierendes aliphatisches Polymer aus olefinisch ungesättigten Verbindungen und Kohlenmonoxidmonomeren mit einem zahlenmittleren Molekulargewicht zwischen 200 und 20.000 und darauf aufgepfropfte Polymere von Vinylmonomeren.

2. Zusammensetzung nach Anspruch 1, worin die olefinisch ungesättigten Verbindungen Ethen und Propen umfassen.

3. Ein Klebstoff, umfassend ein alternierendes aliphatisches Polymer von olefinisch ungesättigten Verbindungen und Kohlenmonoxidmonomeren mit einem zahlenmittleren Molekulargewicht zwischen 500 und 5.000 und Vinylpolymere, aufgepfropft auf das aliphatische Polymer zur Ausbildung eines Pfropfcopolymers, und ein mit dem Pfropfcopolymer gemischtes Härtungsmittel.

4. Der Klebstoff nach Anspruch 3, worin das Härtungsmittel ein aliphatisches primäres Diamin ist.

5. Der Klebstoff nach Anspruch 4, worin das Molverhältnis der Carbonylgruppen in dem Copolymer zu den primären Aminogruppen des Härtungsmittels im Bereich von 0,4 bis 2,0 liegt.

6. Der Klebstoff nach Anspruch 4 oder 5, weiterhin umfassend einen Katalysator, umfassend eine organische Säure mit einem pKa-Wert im Bereich von 2 bis 5,5, bestimmt in Wasser bei 20°C, der in einer Menge von 0,1 bis 10,0 Gew.-%, bezogen auf das Gewicht des Copolymers, zugegen ist.

7. Härtbare Harzzusammensetzung, umfassend die Zusammensetzung nach Anspruch 1 in Wasser und mit einer Viskosität zwischen etwa 200 und 8.000 mPa.s bei Raumtemperatur, bestimmt in einem Brookfield-Viskometer.

8. Verfahren zur Herstellung eines härtbaren Harzes, umfassend:
(a) Dispergieren eines alternierenden aliphatischen Polymers aus olefinisch ungesättigten Verbindungen und Kohlenmonoxid mit einem zahlenmittleren Molekulargewicht zwischen etwa 500 und 5.000 in Wasser, und
(b1) Zusetzen eines Initiators und eines Vinylmonomers zu der Dispersion zur Ausbildung eines Pfropfcopolymers, oder
(b2) Zusetzen eines Vinylmonomers und Einwirkenlassen hochenergetischer Strahlung auf die Kombination aus dem alternierenden aliphatischen Polymer aus olefinisch ungesättigten Verbindungen und Kohlenmonoxid und dem Vinylmonomer zur Ausbildung eines Pfropfcopolymers.

9. Verfahren nach Anspruch 8, worin das Vinylmonomer ein monoolefinischer Kohlenwasserstoff, monoolefinisch ungesättigter Ester, Vinylester von halogenierten Säuren, eine Allylverbindung, eine Methallylverbindung, ein Ester von Alkenylalkohol, Halogenalkylacrylat, Alkyl-α-cyanoacrylat, Fumarat, monoolefinisch ungesättigtes Nitril, ein Amid von Acrylsäure, Vinylalkylether, Vinylsulfid, diolefinisch ungesättigter Kohlenwasserstoff oder ein Gemisch hievon ist.

10. Verfahren zur Ausbildung eines Holzverbundes aus zwei oder mehreren Teilen, umfassend:
(a) Vereinigen der Zusammensetzung nach Anspruch 1 mit einem Härtungsmittel und einem Katalysator zur Ausbildung eines Leimes,
(b) Auftragen des Leimes auf einen oder mehrere, zusammenzufügende Teile, und
(c) Zusammenfügen dieser Teile.

## Revendications

1. Composition comprenant un polymère aliphatique alterné de composés oléfiniquement insaturés et de monomères de monoxyde de carbone ayant un poids moléculaire moyen numérique entre 200 et 20.000 et greffés à celui-ci, des polymères de monomères vinyliques.

2. Composition suivant la revendication 1, dans laquelle les composés oléfiniquement insaturés comprennent de l'éthène et du propène.

3. Adhésif comprenant un polymère aliphatique alterné de composés oléfiniquement insaturés et de monomères de monoxyde de carbone ayant un poids moléculaire moyen numérique entre 500 et 5000 et des polymères vinyliques greffés audit polymère aliphatique pour former un copolymère greffé, et un agent de durcissement mélangé au copolymère greffé précité.

4. Adhésif suivant la revendication 3, dans lequel l'agent de durcissement est une diamine primaire aliphatique.

5. Adhésif suivant la revendication 4, dans lequel le rapport molaire des groupes carbonyle dans le copolymère et des groupes amine primaire de l'agent de durcissement se situe dans la gamme de 0,4 à 2,0.

6. Adhésif suivant l'une ou l'autre des revendications 4 et 5, comprenant de plus un catalyseur comprenant un acide organique ayant un pKa allant de 2 à 5,5, lorsque mesuré dans de l'eau à 20°C, et qui est présent en une quantité de 0,1 à 10,0% en poids, par rapport au poids du copolymère.

7. Composition de résine durcissable comprenant la composition de la revendication 1 dans de l'eau et ayant une viscosité entre environ 200 et 8000 mPa.s à la température ambiante, telle que mesurée dans un viscosimètre Brookfield.

8. Procédé de fabrication d'une résine durcissable comprenant :
(a) la dispersion d'un polymère aliphatique altemé de composés oléfiniquement insaturés et de monoxyde de carbone ayant un poids moléculaire moyen numérique entre environ 500 et 5000 dans de l'eau, et
(b1) l'addition d'un initiateur et d'un monomère vinylique à la dispersion précitée pour former un copolymère greffé, ou
(b2) l'addition d'un monomère vinylique et l'exposition de la combinaison du polymère aliphatique alterné de composés oléfiniquement insaturés et de monoxyde de carbone et du monomère vinylique à un rayonnement d'énergie élevée pour former un copolymère greffé.

9. Procédé suivant la revendication 8, dans lequel le monomère vinylique est un hydrocarbure monooléfinique, un ester monooléfiniquement insaturé, un ester vinylique d'acide halogéné, un composé allylique, un composé méthallylique, un ester d'alcool alcénylique, un acrylate d'haloalkyle, un alpha-cyanoacrylate d'alkyle, un fumarate, un nitrile monooléfiniquement insaturé, un amide d'acide acrylique, un éther vinyl alkylique, un sulfure de vinyle, un hydrocarbure dioléfiniquement insaturé ou un mélange de ceux-ci.

10. Procédé de formation d'un composite de bois constitué de deux ou plusieurs pièces comprenant :
(a) la combinaison de la composition de la revendication 1 avec un agent de durcissement et un catalyseur pour former une colle,
(b) l'application de ladite colle sur une ou plusieurs pièces à réunir, et
(c) la réunion desdites pièces.
